# EUROPÄISCHE PATENTSCHRIFT

(11) **EP 2 347 814 B1**
(45) Veröffentlichungstag und Bekanntmachung des Hinweises auf die Patenterteilung: **21.02.2018**
(21) Anmeldenummer: 10193579.9
(22) Anmeldetag: 03.12.2010
(51) Int. Cl.: B01D 35/30, F02M 37/22, B01D 35/147

(54) **Filtereinrichtung**
Filter device
Dispositif de filtre

(30) Priorität: 22.01.2010 DE 102010005390
(43) Veröffentlichungstag der Anmeldung: 27.07.2011
(73) Patentinhaber: MAHLE International GmbH, 70376 Stuttgart (DE)
(72) Erfinder: Wetzel, Jörn, 70372 Stuttgart (DE)
(74) Vertreter: BRP Renaud & Partner mbB Rechtsanwälte Patentanwälte Steuerberater

(56) Entgegenhaltungen:
- EP-A1- 2 206 543
- WO-A1-01/96731
- GB-A- 2 365 511
- US-A1- 2009 236 276

## Beschreibung

Die vorliegende Erfindung betrifft eine Filtereinrichtung, insbesondere einen Öl- oder Kraftstofffilter, mit einem, einen Filtergehäusetopf und ein Filtergehäusedeckel aufweisenden Filtergehäuse gemäß dem Oberbegriff des Anspruchs 1.

Aus der EP 0 779 091 A1 ist eine gattungsgemäße Filtereinrichtung mit einem zumindest einen Filtergehäusedeckel aufweisenden Filtergehäuse bekannt. An dem Filtergehäusedeckel ist neben den Anschlüssen für Zu- und Ablauf ein Ventil zur Kraftstoffrückführung in einer Halterung angeordnet. Die einstückig ausgebildete und durch eine einzige Lötstelle am Filtergehäusedeckel befestigte Halterung bildet dabei zugleich einen Dichtungssitz mit kleinem Durchmesser für einen auf die Schmutzseite der Filtereinrichtung führenden Anschluss des Ventils, der als Rohrstutzen mit außenliegenden Dichtringen ausgeführt ist. Eine doppelt wirkende, symmetrische Tragspange ist in der Halterung eingesteckt und sorgt für eine sichere Halterung des Ventils in seiner einzigen Einbaulage.

Aus der DE 102 49 740 A1 ist ein Verbindungsstutzen für eine Kurbelgehäuseentlüftung einer Brennkraftmaschine mit einem Flanschabschnitt bekannt, in dem eine elektrisch beheizbare Metallhülse aufgenommen ist. An deren Außenwandstelle ist mindestens ein elektrischer Heizwiderstand befestigt, der über einen elektrischen Anschluss mit Strom versorgt wird. Um eine dauerhafte Abdichtung der Heizwiderstände zu gewährleisten, ist die Metallhülse im Bereich des Heizwiderstandes gegenüber dem Flanschabschnitt elastisch abgedichtet.

Aus der DE 102 37 762 A1 ist ein Heizmodul im Bereich eines Frischlufttraktes einer Brennkraftmaschine bekannt. Um eine Vereisung an einem Austrittsabschnitt des Heizmoduls zu vermeiden, können am oder im Austrittsabschnitt mehrere Windungen eines Heizdrahts angeordnet sein, wobei mehrere Heizdrahtwindungen in oder an einer Mündung des Austrittsabschnitts bezüglich der Gasaustrittsrichtung im Wesentlichen radial nebeneinander angeordnet sind.

Aus der US 2009/0236276 A1 ist ein modulares Trinkwasserfiltersystem bekannt, das austauschbare Filterkartuschen verwendet. Die Filterkartuschen werden über Adapterringe mit dem Filterkopf verbunden. Der Filterkopf ist über eine Steck-Dreh-Verbindung an dem Adapterring gehalten.

Aus der WO 01/96731 A1 ist ein Kraftstofffilter bekannt, der ein Ventil aufweist, das durch einen Bajonettverschluss mit einem Gehäuse verbunden ist.

Die vorliegende Erfindung beschäftigt sich mit dem Problem, für eine Filtereinrichtung der gattungsgemäßen Art, eine verbesserte Ausführungsform anzugeben, welche sich insbesondere durch eine erleichterte Montage und eine hohe Zuverlässigkeit auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, ein Ventil einer Filtereinrichtung über eine Steck-Dreh-Verbindung, das heißt über einen Bajonettverschluss, an der Filtereinrichtung zu befestigen und dadurch sowohl die Montage des Ventils an der Filtereinrichtung zu vereinfachen als auch eine zuverlässige Verbindung und damit eine hohe Funktionssicherheit zu erreichen. Der erfindungsgemäße Kraftstofffilter weist dabei ein Filtergehäuse mit einem Filtergehäusetopf und einem Filtergehäusedeckel auf. Zusätzlich weist die Filtereinrichtung ein Ventil auf, das als Vorwärmventil ausgebildet ist und eine Zumischung von erwärmtem Kraftstoff in den Kraftstofffilter steuern kann oder steuert. Das Gehäuse des Ventils ist in einer außen am Filtergehäuse, das heißt beispielsweise am Filtergehäusedeckel, befestigten Halterung eingesetzt und dort unverlierbar fixiert. Die Befestigung des Ventils in bzw. an der Halterung des Filtergehäuses erfolgt dabei erfindungsgemäß über oben erwähnte Steck-Dreh-Verbindung, wodurch einerseits die Montage des Ventils an der Filtereinrichtung im Vergleich zu beispielsweise einem Anlöten oder einem Verschrauben, deutlich vereinfacht wird und zugleich eine hohe Funktionssicherheit erreicht werden kann, da derartige Bajonettverschlüsse üblicherweise eine zuverlässige Fixierung des Ventils an der Filtereinrichtung gewährleisten. Ein unbeabsichtigtes sich Lösen des Ventils aus der Halterung des Filtergehäuses ist dabei nahezu ausgeschlossen. Sind die beiden Zapfen des Bajonettverschlusses koaxial zueinander angeordnet, so ist zusätzlich ein als Montagesicherung dienender Zapfen vorgesehen ist, der einen Einbauzustand vorgibt und der in eine an der Halterung angeordnete Ausnehmung eingreift. Hierdurch kann verhindert werden, dass das Ventil falsch herum eingebaut wird. Dies kann alternativ auch verhindert werden, indem die beiden Zapfen nicht koaxial zueinander angeordnet sind, bspw. im 195° Winkel, wodurch sich ebenfalls lediglich eine einzige mögliche Einbaulage ergibt.

Bei einer weiteren vorteilhaften Ausführungsform der erfindungsgemäßen Lösung, sind an der Halterung bajonettverschlussartig ausgebildete Schlitze vorgesehen, wobei zumindest einer dieser Schlitze einen Hinterschnitt aufweist. Ein derartiger Hinterschnitt wirkt dabei als Lösesicherung und erschwert ein Ausfahren des Zapfens aus dem bajonettartig ausgebildeten Schlitz. Der Hinterschnitt kann dabei beispielsweise durch einen nasenartig ausgebildeten Vorsprung gebildet sein. Ein derartiger Hinterschnitt stellt somit eine zusätzliche Lösesicherung dar, welche ein unbeabsichtigtes Lösen des Ventils aus der Halterung der Filtereinrichtung verhindert, zumindest aber erschwert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Filtereinrichtung mit einer an einem Filtergehäusedeckel angeordneten Halterung,
- Fig. 2: ein Ventil zur Befestigung in der Halterung,
- Fig. 3: eine Detaildarstellung der Halterung,
- Fig. 4-6: einzelne Montageschritte zur Befestigung des Ventils an der Filtereinrichtung.

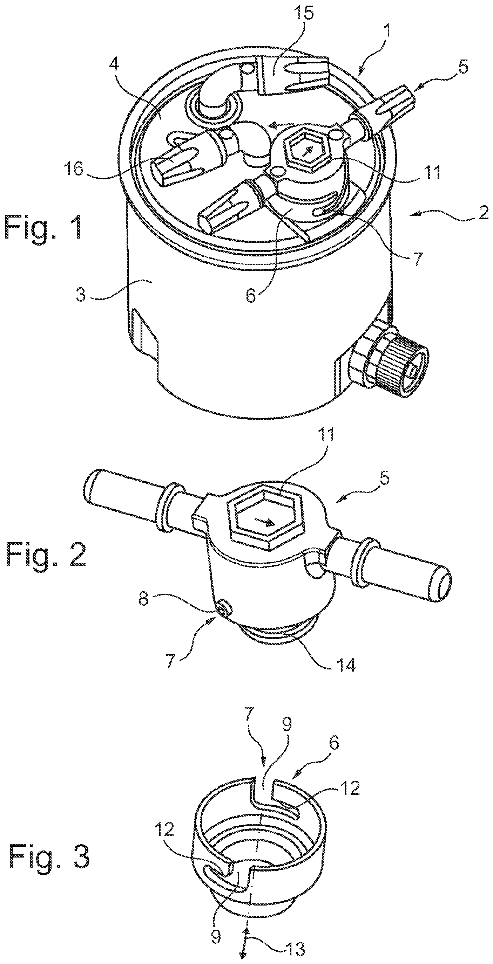

Entsprechend der Fig. 1 und 4 bis 6, weist ein erfindungsgemäßer Kraftstofffilter 1, ein Filtergehäuse 2 auf, welches im wesentlichen aus einem Filtergehäusetopf 3 sowie einem Filtergehäusedeckel 4 besteht. Betrachtet man dabei die Fig. 1 sowie 4 bis 6, so kann man erkennen, dass am Filtergehäusedeckel 4 eine Ventileinrichtung 5 befestigt ist, ebenso wie ein Zulauf 15 und ein Ablauf 16, über welche die Filtereinrichtung 1 mit zu reinigendem Kraftstoff, beschickt bzw. entsorgt wird. Die Wahl des Zulaufs 15 und Ablaufs 16 ist dabei rein exemplarisch zu verstehen, so dass generell auch der Zulauf 15 als Ablauf und der Ablauf 16 als Zulauf denkbar sind. Darüber hinaus umfasst die erfindungsgemäße Filtereinrichtung 1 das oben erwähnte Ventil 5, dessen Gehäuse in einer außen am Filtergehäuse 2, insbesondere am Filtergehäusedeckel 4, befestigten Halterung 6 (vgl. insbesondere Fig. 3) eingesetzt und dort unverlierbar fixiert ist. Erfindungsgemäß erfolgt nun eine Befestigung des Ventils 5 an der Halterung 6 und damit am Filtergehäusedeckel 4 der Filtereinrichtung 1 mittels einer Steck-Dreh-Verbindung 7, das heißt mittels eines Bajonettverschlusses.

Die Steck-Dreh-Verbindung 7 wird dabei von am Gehäuse des Ventils abstehenden Zapfen 8 gebildet, die mit bajonettverschlussartig ausgebildeten Schlitzen 9 an der Halterung 6 verbindbar sind. Die Schlitze 9 sind dabei in bekannter Weise durch einen axialen Schlitzabschnitt und einen sich daran anschließenden kurzen und in Umfangsrichtung erstreckenden Schlitzabschnitt gebildet. Die zumindest zwei im Gehäuse des Ventils 5 angeordneten Zapfen 8 können dabei entweder koaxial oder bezüglich deren Achsen abgewinkelt angeordnet sein. Bei einer koaxialen Anordnung der beiden Zapfen 8 zueinander, ist zusätzlich ein als Montagesicherung dienender Zapfen 8' vorgesehen ist, der einen Einbauzustand vorgibt und der in eine an der Halterung 6 angeordnete Ausnehmung 10 eingreift. Eine Befestigung des Ventil 5 am Filtergehäusedeckel 4 der Filtereinrichtung 1 kann dabei ausschließlich über die beiden zugehörigen Schlitze 9 eingreifenden Zapfen 8 bewerkstelligt werden.

Um ein Befestigen des Ventils 5 am Filtergehäuse 2 und insbesondere am Filtergehäusedeckel 4 der Filtereinrichtung 1 zu vereinfachen, kann am Gehäuse des Ventils 5 eine Haltekontur 11, beispielsweise in der Art eines Sechskants, vorgesehen sein. Selbstverständlich sind auch beliebige andere Ausführungsformen von Haltekonturen 11, wie beispielsweise Schlitze, Kreuzschlitze oder Inbus denkbar. Um ein unbeabsichtigtes sich Lösen der Steck-Dreh-Verbindung 7 und damit ein unbeabsichtigtes sich Lösen des Ventils 5 von der Filtereinrichtung 1 zuverlässig verhindern zu können, kann zumindest einer der bajonettartig ausgebildeten Schlitze 9 einen Hinterschnitt 12 mit einer in den Schlitz 9 hineinragenden Nase vorgesehen sein. Denkbar ist auch, dass eine nicht gezeigte Federeinrichtung vorgesehen ist, welche das Ventil 5 in Axialrichtung 13 der Halterung 6 vorspannt und dadurch ein Überwinden des Hinterschnitts 12 zusätzlich erschwert.

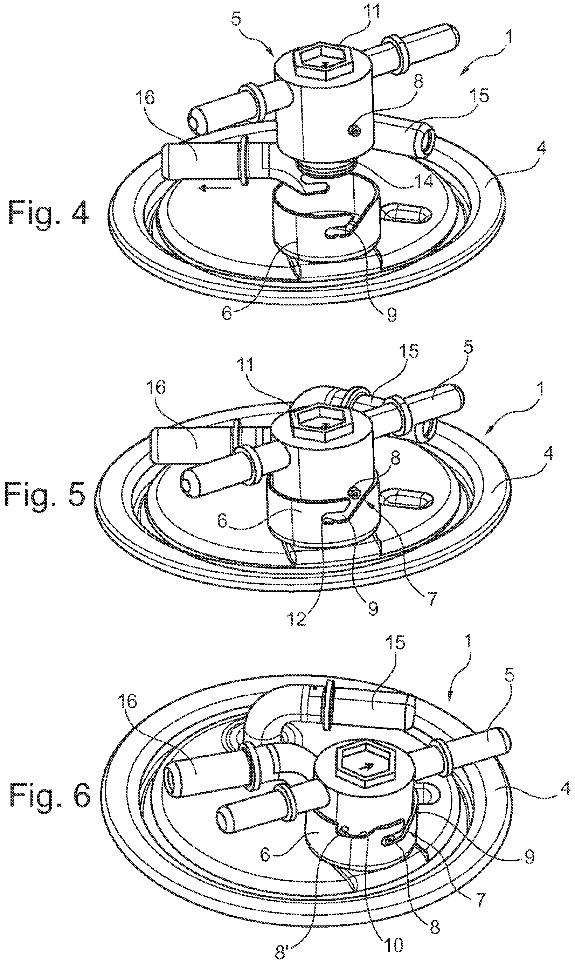

Um eine dichte Verbindung zwischen dem Ventil 5 und der Filtereinrichtung 1 gewährleisten zu können, ist im gezeigten Ausführungsbeispiel an dem Ventil 5 eine O-Ringdichtung 14 (vgl. Fig. 2 und 4) vorgesehen, die in einen an der Halterung 6 angeordneten Ventilsitz dicht eingreift. Die Ausbildung der Zapfen 8 bzw. 8' kann ebenfalls unterschiedlich sein, so ist beispielsweise denkbar, dass zumindest einer der Zapfen 8, 8' einen vollrunden Querschnitt oder aber einen tonnenförmigen Querschnitt, das heißt einen runden Querschnitt mit zwei gegenüberliegend abgeflachten Seiten (vgl. Fig. 2) aufweist. Generell ist auch denkbar, dass zumindest einer der Zapfen 8,8' einen hakenförmigen Querschnitt aufweist und damit unlösbar ist. Das Ventil 5 kann beispielsweise als Vorwärmventil ausgebildet und eine Zumischung von erwärmtem Kraftstoff in die Filtereinrichtung 1 steuern.

Mit der erfindungsgemäßen Steck-Dreh-Verbindung 7 zur Befestigung des Ventils 5 an der Filtereinrichtung 1 kann nicht nur die Montage des Ventils 5 an der Filtereinrichtung 1 vereinfacht werden, sondern es wird zugleich auch eine Befestigung mit einer hohen Lösesicherheit erreicht.

## Patentansprüche

1. Kraftstofffilter (1) mit einem, einen Filtergehäusetopf (3) und einen Filtergehäusedeckel (4) aufweisenden Filtergehäuse (2), und mit einem Ventil (5), dessen Gehäuse in einer außen am Filtergehäuse (2) befestigte Halterung (6) eingesetzt und dort unverlierbar fixiert ist, wobei das Ventil (5) über eine Steck-Dreh-Verbindung (7) an der Halterung (6) des Filtergehäuses (2) befestigt ist, wobei das Ventil (5) als Vorwärmventil ausgebildet ist und eine Zumischung von erwärmtem Kraftstoff in den Kraftstofffilter (1) steuern kann oder steuert, **dadurch gekennzeichnet,**
- **dass** am Gehäuse des Ventils (5) zumindest zwei abstehende Zapfen (8) vorgesehen sind, die mit bajonettverschlussartig ausgebildeten Schlitzen (9) an der Halterung (6) verbindbar sind, und
- **dass** die zumindest zwei Zapfen (8) nicht koaxial zueinander angeordnet sind, insbesondere bezüglich deren Achse um z.B. 15° oder 30° abgewinkelt zueinander angeordnet sind oder
- **dass** die zumindest zwei Zapfen (8) koaxial zueinander angeordnet sind und zusätzlich ein als Montagesicherung dienender Zapfen (8') vorgesehen ist, der einen Einbauzustand vorgibt und der in eine an der Halterung (6) angeordnete Ausnehmung (10) eingreift.

2. Kraftstofffilter nach Anspruch 1,
**dadurch gekennzeichnet,**
**dass** die Halterung (6) am Filtergehäusedeckel (4) angeordnet ist.

3. Kraftstofffilter nach einem der Ansprüche 1 bis 2,
**dadurch gekennzeichnet,**
**dass** an dem Gehäuse des Ventils (5) eine Haltekontur (11), insbesondere ein Sechskant, vorgesehen ist.

4. Kraftstofffilter nach einem der Ansprüche 1 bis 3,
**dadurch gekennzeichnet,**
- **dass** zumindest einer der Zapfen (8,8') einen vollrunden oder einen tonnenförmigen Querschnitt aufweist und damit lösbar ist, oder
- **dass** zumindest einer der Zapfen (8,8') einen hakenförmigen Querschnitt aufweist und damit unlösbar ist.

5. Kraftstofffilter nach einem der Ansprüche 1 bis 4,
**dadurch gekennzeichnet**,
zumindest einer der bajonettartig ausgebildeten Schlitze (9) einen Hinterschnitt (12) aufweist.

## Claims

1. Fuel filter (1) with a filter housing (2) comprising a filter housing casing (3) and a filter housing cover (4), and with a valve (5) whose housing is inserted in a holder (6) fastened externally on the filter housing (2) and is captively fixed there, wherein the valve (5) if fastened via an insert-and-twist connection (7) to the holder (6) of the filter housing (2), wherein the valve (5) is formed as a preheating valve and can regulate or regulates a heated fuel mixture into the fuel filter (1),
**characterised in that**
- at least two projecting pins (8) are provided on the housing of the valve (5), which can be connected to the holder (6) via slits (9) formed in the manner of a bayonet closure, and
- the at least two pins (8) are not arranged co-axially with respect to one another, in particular are arranged offset by for example an angle 15°or 30° with respect to their axis, or
- the at least two pins (8) are arranged co-axially with respect to one another and in addition a pin (8') is provided serving as assembly security, which sets an installation state and engages in a recess (10) arranged on the holder (6).

2. Fuel filter according to claim 1,
**characterised in that**
the holder (6) is arranged on the filter housing cover (4).

3. Fuel filter according to any one of claims 1 and 2,
**characterised in that** a holding contour (11), in particular a hexagonal contour, is provided on the housing of the valve (5).

4. Fuel filter according to any one of claims 1 to 3,
**characterised in that**
- at least one of the pins (8, 8') has an all-round cross-section or a barrel-shaped cross-section and is therefore detachable, or
- at least one of the pins (8, 8') has a hook-shaped cross-section and is therefore not detachable.

5. Fuel filter according to any one of claims 1 to 4,
**characterised in that**
at least one of the bayonet-shaped slits (9) has an undercut portion (12).

## Revendications

1. Filtre à carburant (1) avec un boîtier de filtre (2) présentant un pot de logement de filtre (3) et un couvercle de logement de filtre (4), et avec une soupape (5), dont le boîtier est inséré dans un support (6) fixé à l'extérieur au boîtier de filtre (2) et y est fixé de manière imperdable, dans lequel la soupape (5) est fixée, par l'intermédiaire d'une liaison d'insertion et de rotation (7), au support (6) du boîtier de filtre (2), dans lequel la soupape (5) est réalisée comme soupape de préchauffage et peut commander ou commande un mélange de carburant chauffé dans le filtre à carburant (1),
**caractérisé en ce**
- **que**, au niveau du boîtier de la soupape (5), au moins deux tenons (8) en saillie sont prévus, lesquels peuvent être raccordés à des fentes (9) réalisées comme une fermeture à baïonnette au niveau du support (6), et
- **que** les au moins deux tenons (8) ne sont pas disposés coaxialement l'un par rapport à l'autre, en particulier sont disposés de manière coudée l'un par rapport à l'autre par rapport à leur axe de par exemple 15° ou 30° ou
- **que** les au moins deux tenons (8) sont disposés coaxialement l'un par rapport à l'autre et en outre un tenon (8') servant de système de sécurité au montage est prévu, lequel prescrit un état de montage et lequel se met en prise dans un évidement (10) disposé au niveau du support (6).

2. Filtre à carburant selon la revendication 1,
**caractérisé en ce**
**que** le support (6) est disposé au niveau du couvercle de logement de filtre (4).

3. Filtre à carburant selon l'une quelconque des revendications 1 et 2,
**caractérisé en ce**
**qu'**un contour de retenue (11), en particulier un hexagone, est prévu au niveau du boîtier de la soupape (5).

4. Filtre à carburant selon l'une quelconque des revendications 1 à 3,
**caractérisé en ce**
- **qu'**au moins un des tenons (8, 8') présente une section transversale complètement ronde ou en forme de tonneau et peut être détaché avec celle-ci, ou
- **qu'**au moins un des tenons (8, 8') présente une section transversale en forme de crochet et ne peut pas être détaché avec celle-ci.

5. Filtre à carburant selon l'une quelconque des revendications 1 à 4,
**caractérisé en ce**
**qu'**au moins une des fentes (9) réalisées comme une baïonnette présente une contre-dépouille (12).
